# EUROPEAN PATENT APPLICATION

(11) **EP 4 699 426 A1**
(43) Date of publication of application: **25.02.2026**
(21) Application number: 25184289.4
(22) Date of filing: 20.06.2025
(51) Int. Cl.: A01B 69/04, G01S 19/41

(54) **WORKING MACHINE**

(30) Priority: 02.08.2024 JP 2024127948
(71) Applicant: KUBOTA CORPORATION, Osaka-shi, Osaka 556-8601 (JP)
(72) Inventor: SAKAI, Ken, Sakai-shi (JP); MITANI, Toshiki, Sakai-Shi (JP); TAKEOKA, Susumu, Sakai-shi (JP); KAWANISHI, Daisuke, Sakai-shi (JP); YOSHIKAWA, Kazuo, Sakai-shi (JP)
(74) Representative: Schlegel, Sebastian

(57) **Abstract**

A working machine (1) includes a vehicle body (2) to travel, an operator's seat (4), a position detector (40) to acquire position information from one or more positioning satellites (G), a correction information communicator assembly (50) to wirelessly connect to an external communication network (N), and a controller (60) configured or programmed to compensate for an error in the position information based on position correction information acquired from the external communication network (N). The correction information communicator assembly (50) is located in the vicinity of the operator's seat (4).

## Description

The present invention relates to a working machine having a position detecting function.

### Background

In recent years, to achieve autonomous traveling with higher accuracy, working machines have been developed which set a target travel route after compensating for an error in measured position information provided by a Global Navigation Satellite System (GNSS). The error is compensated for based on position correction information acquired from an external communication network by a correction information communicator assembly (for example, Japanese Unexamined Patent Application Publication No. 2021-85800).

However, the working machines according to the related art include many members with low radio wave transparency, such as steel plates. Therefore, depending on the location at which the correction information communicator assembly is mounted, the communication is unstable and the measured position cannot be accurately corrected. In addition, in the working machines according to the related art, the location at which the correction information communicator assembly is to be mounted is not determined. Therefore, depending on the manner in which the correction information communicator assembly is attached, there is a possibility that the correction information communicator assembly will come into contact with surrounding structures due to the vibrations of the vehicle body that is traveling, or that a communication harness connecting the correction information communicator assembly to a controller will receive an excessive load, resulting in a communication failure.

### Summary

The present invention has been made in light of the above-described problem, and an object of the present invention is to provide a working machine capable of performing measured position correction with high accuracy and stability.

To achieve the above-described object, a working machine according to the independent claim 1 is provided. Embodiments are the subject matter of dependent claims in the appended set of claims.

A working machine according to an example embodiment of the present invention includes a vehicle body to travel, an operator's seat, a position detector to acquire position information from one or more positioning satellites, a correction information communicator assembly to wirelessly connect to an external communication network, and a controller configured or programmed to compensate for an error in the position information based on position correction information acquired from the external communication network, wherein the correction information communicator assembly is located in the vicinity of the operator's seat.

The correction information communicator assembly may be located lower than the operator's seat.

The vehicle body may include a mount to support the operator's seat. The correction information communicator assembly may be located inside the mount.

The mount may include a cover body transparent to radio waves. The correction information communicator assembly may be adjacent to the cover body.

The cover body may be located at a front portion of the mount.

The correction information communicator assembly may include a communicator, and a communicator assembly main body to transfer, to the controller, the position correction information received by the communicator. The correction information communicator assembly may be positioned such that at least the communicator is adjacent to the cover body.

The working machine may further include a steering assembly. The steering assembly may be located forward of the operator's seat. The correction information communicator assembly may be located at a lower portion of the steering assembly.

The steering assembly may include an operation portion panel to cover the lower portion of the steering assembly. The operation portion panel may be at least partially made of a plate transparent to radio waves.

The correction information communicator assembly may include a communicator, and a communicator assembly main body to transfer, to the controller, the position correction information received by the communicator. The correction information communicator assembly may be positioned such that at least the communicator is adjacent to the operation portion panel.

The correction information communicator assembly may include a wireless communicator assembly wirelessly connectable to a wireless communication terminal and wirelessly connectable to the external communication network via the wireless communication terminal.

The correction information communicator assembly may include a wireless communicator assembly wirelessly connectable to the external communication network directly.

With one or more example embodiments of the present invention, constant and stable communication can be maintained. Thus, a working machine capable of performing measured position correction with high accuracy and stability can be provided.

The above and other elements, features, steps, characteristics and advantages of the present invention will become more apparent from the following detailed description of the example embodiments with reference to the attached drawings.

### Brief description of drawings

A more complete appreciation of example embodiments of the present invention and many of the attendant advantages thereof will be readily obtained as the same becomes better understood by reference to the following detailed description when considered in connection with the accompanying drawings described below.
- FIG. 1: is a schematic diagram illustrating a positioning assistance system.
- FIG. 2: is a left side view of a working machine according to an embodiment of the present invention.
- FIG. 3: is a top view of the working machine according to an embodiment of the present invention.
- FIG. 4: is a perspective view of the working machine according to an embodiment of the present invention.
- FIG. 5: is a perspective view of a portion around an operator's seat.
- FIG. 6: is a perspective view of a portion around a steering assembly.
- FIG. 7: is a lower perspective view illustrating an interior of a mount.
- FIG. 8: is an exploded perspective view of a portion including a correction information communicator assembly.
- FIG. 9: is a left side view of a portion around an operator's seat in a working machine according to a first variation.
- FIG. 10: is a left side view of a portion around an operator's seat in a working machine according
- FIG. 11: to a second variation. is a left side view of a portion around an operator's seat in a working machine according to a third variation.
- FIG. 12: is a left side view of a portion around an operator's seat in a working machine according to a fourth variation.

### Description of the example embodiments

Example embodiments will now be described with reference to the accompanying drawings, wherein like reference numerals designate corresponding or identical elements throughout the various drawings. The drawings are to be viewed in an orientation in which the reference numerals are viewed correctly.

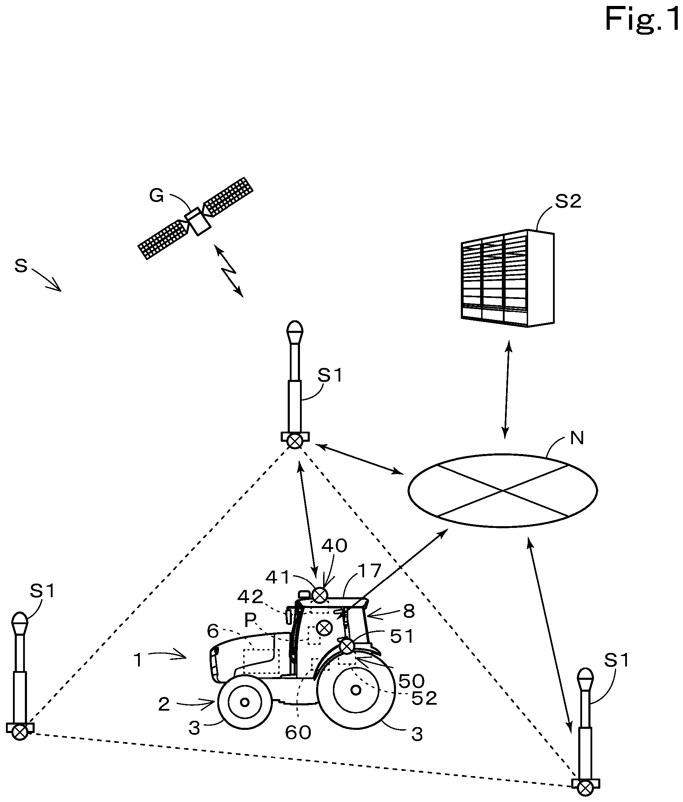

Example embodiments of the present invention will now be described with reference to the drawings. A working machine 1 according to the present embodiment has an autonomous traveling function. As illustrated in FIG. 1, the working machine 1 includes a position detector 40, a correction information communicator assembly 50, and a controller 60. The working machine 1 is capable of setting a target travel route based on position information (measured position information) acquired by the position detector 40, and autonomously traveling along the target travel route.

More specifically, the position detector 40 acquires position information (measured position information including a latitude and longitude) from a satellite positioning system, such as the Global Positioning System (GPS), the Global Navigation Satellite System (GLONASS), Michibiki (Quasi-Zenith Satellite System (QZSS)), Galileo, or BeiDou. The position detector 40 includes a satellite communicator 41 and a measurer 42. The satellite communicator 41 receives a satellite signal transmitted from a positioning satellite G (measured position information including the location of the positioning satellite G and a transmission time). The measurer 42 measures the position (for example, the latitude and longitude) of a machine body based on the satellite signal received by the satellite communicator 41. Thus, the position detector 40 receives the satellite signal transmitted from the positioning satellite G and detects the position of the machine body based on the satellite signal.

The position detector 40 of the present embodiment is a position detector with a built-in antenna in which the satellite communicator 41 and the measurer 42 are accommodated in the same casing, and is located at an upper front portion of a roof 17 of a cabin 8. The location of the position detector 40 is not limited to the upper front portion of the roof 17 as long as the position detector 40 is capable of constantly and stably receiving the satellite signal transmitted from the positioning satellite G.

For example, the position detector 40 may be located at a rear portion of the cabin 8 or a front portion of the vehicle body 2. When a canopy is provided instead of the cabin 8 as a protector for the operator's seat 4, the position detector 40 may be located at an upper portion of a roof of the canopy, or at a front portion or a rear portion of the roof. When a ROPS is provided as a protector for the operator's seat 4, the position detector 40 may be located at an upper frame portion of the ROPS.

The correction information communicator assembly 50 wirelessly connects to an external communication network N and acquires position correction information from a positioning assistance system S. The correction information communicator assembly 50 includes a communicator 51 and a communicator assembly main body 52. The correction information communicator assembly 50 of the present embodiment is a communication device with a built-in antenna in which the communicator 51 and the communicator assembly main body 52 are accommodated in the same casing. Alternatively, the correction information communicator assembly 50 may be a communication device with a separate antenna in which the communicator 51 and the communicator assembly main body 52 are separate components.

The communicator 51 of the present embodiment is wirelessly connected to a wireless communication terminal P, such as a mobile information terminal carried by an operator or an in-vehicle information terminal (control terminal) mounted in the vehicle body 2, via near-field wireless communication, such as Wi-Fi (registered trademark) or Bluetooth (registered trademark). The communicator 51 uses a communication function of the wireless communication terminal P to connect to the external communication network N. In other words, the correction information communicator assembly 50 of the present embodiment includes a wireless communicator assembly (wireless router) which is wirelessly connectable to the wireless communication terminal P and wirelessly connectable to the external communication network N via the wireless communication terminal P.

Alternatively, the correction information communicator assembly 50 may be an in-vehicle wireless communicator assembly wirelessly connectable to the external communication network N directly via a communication base station of a telecommunications network of a telecommunications provider or a data communications network of an internet service provider instead of the above-described near-field wireless communication. In this case, the communicator 51 is wirelessly connected to the external communication network N directly via the above-described communication base station of the telecommunications network or the data communications network.

The positioning assistance system S includes a plurality of positioning base stations S1 and an assistance device S2. The positioning base stations S1 are located at predetermined reference points, such as building roofs and locations around an agricultural field. The positioning base stations S1 transmit satellite signals received from the positioning satellite G to the assistance device S2 via the external communication network N. The assistance device S2 is a fixed computer terminal (server) installed in an agricultural machinery manufacturer, an agricultural cooperative, a management company, or the like. The assistance device S2 transmits observation information based on the satellite signals received from the positioning base stations S1 and position correction information to the outside via the external communication network N.

The controller 60 is an electronic control unit (ECU) that controls the operations of traveling devices 3, a prime mover 6, and other components, and includes a route setter and a travel controller. The route setter sets a target travel route for the working machine 1 after compensating for an error in the measured position information acquired by the position detector 40. The error is compensated for based on the position correction information acquired by the correction information communicator assembly 50. The travel controller automatically controls the working machine 1 so that the working machine 1 travels along the target travel route.

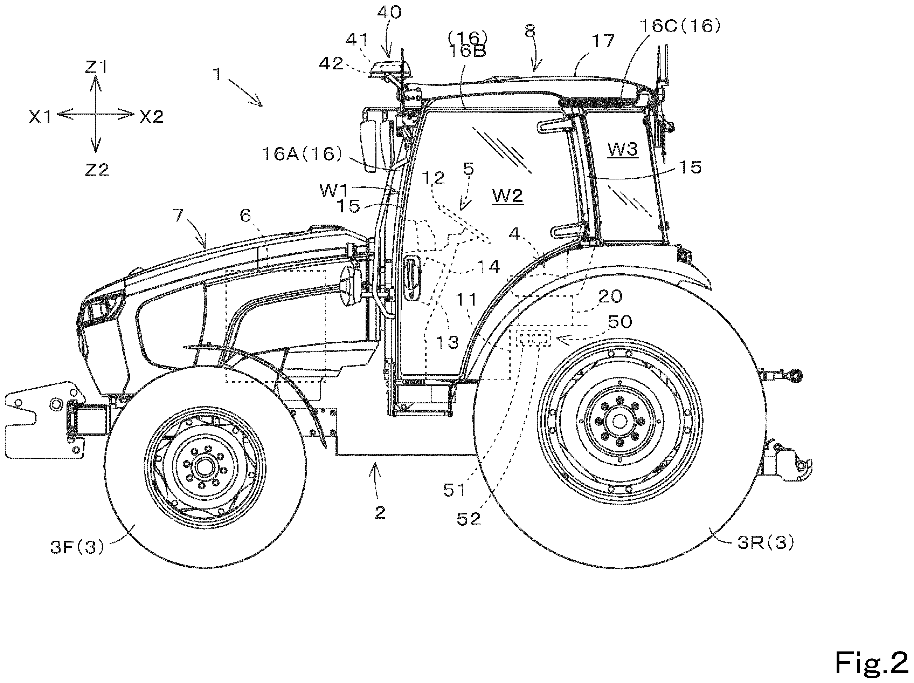

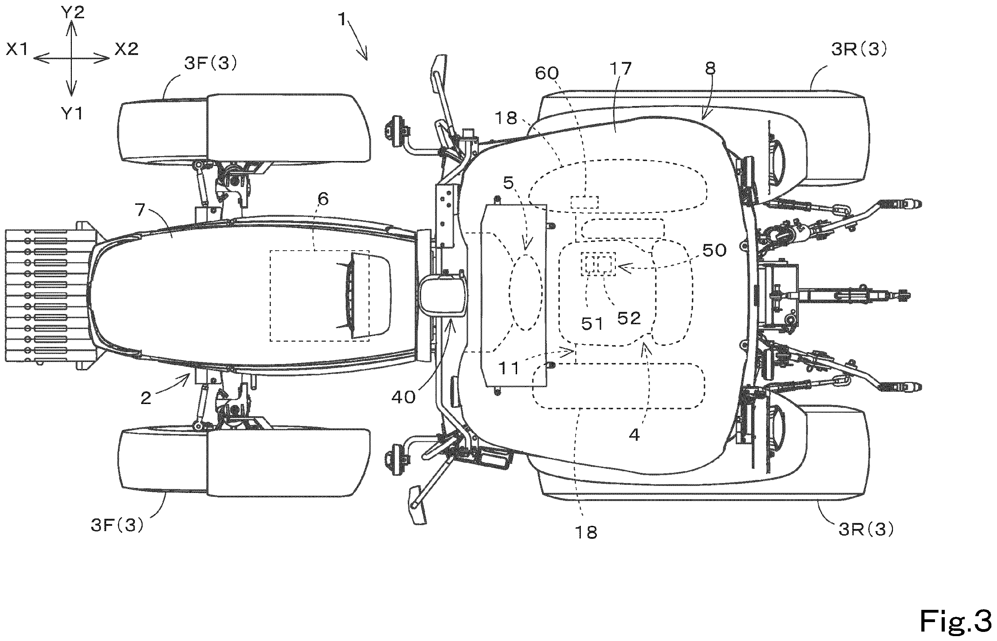

As illustrated in FIGS. 2 and 3, the working machine 1 of the present embodiment is a tractor and includes the vehicle body 2, the traveling devices 3, the operator's seat 4, a steering assembly 5, the prime mover 6, a hood 7, and the cabin 8 serving as a protector for the operator's seat 4. The working machine 1 according to the present invention is not limited to a tractor.

The working machine 1 according to the present invention may be, for example, an agricultural machine other than a tractor, a construction machine, a transport machine, or a utility vehicle. Alternatively, the working machine 1 according to the present invention may be, for example, a chemical spreader or a narrow tractor in which the traveling devices 3 have a narrow tread and that is suitable for traveling along a relatively narrow path between trees in an orchard or ridges in a field. In addition, the working machine 1 according to the present invention may include the canopy or the ROPS instead of the cabin 8 as a protector for the operator's seat 4.

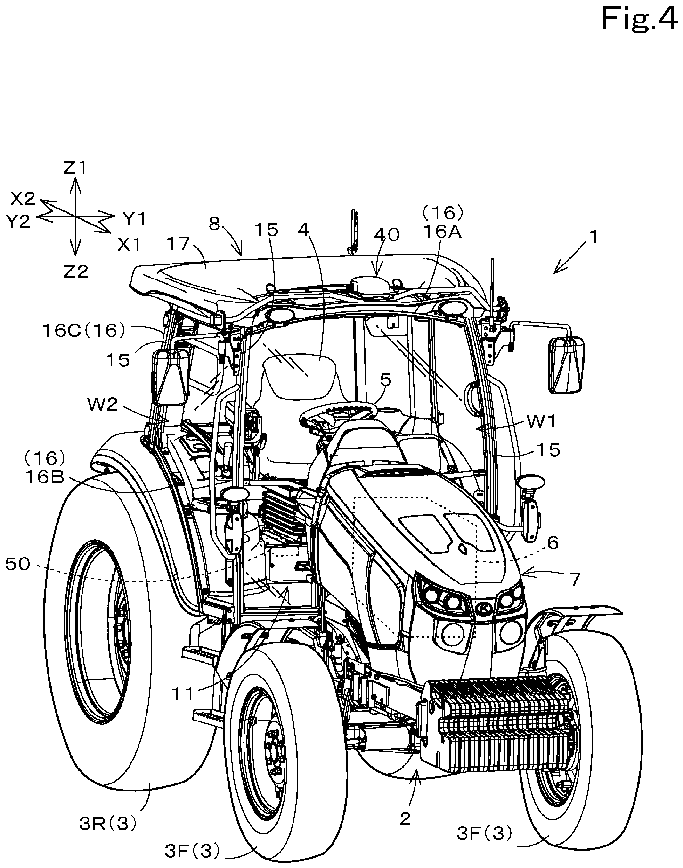

In the following description, a length direction of the vehicle body 2 (direction shown by arrows X1 and X2 in FIGS. 2 to 4) will be referred to as a front-rear direction, a width direction of the vehicle body 2 (direction shown by arrows Y1 and Y2 in FIGS. 3 and 4) as a left-right direction, and a height direction of the vehicle body 2 (direction shown by arrows Z1 and Z2 in FIGS. 2 and 4) as an up-down direction.

The vehicle body 2 includes a metal frame member, a casing of a driving-force transmission (transmission case), and other components that are combined together. In the present embodiment, a front half of the vehicle body 2 includes the frame member extending in the front-rear direction. A rear half of the vehicle body 2 includes the transmission case. The vehicle body 2 is supported by the traveling devices 3 such that the vehicle body 2 is capable of traveling.

The traveling devices 3 support the vehicle body 2 such that the vehicle body 2 is capable of traveling. The traveling devices 3 of the present embodiment are wheels rotatable relative to the vehicle body 2. The traveling devices 3 include left and right front wheels 3F provided at a front portion of the vehicle body 2 and left and right rear wheels 3R provided at a rear portion of the vehicle body 2. The front wheels 3F and/or the rear wheels 3R are steered by the steering assembly 5.

The working machine 1 of the present embodiment is a two-wheel-drive vehicle in which the rear wheels 3R are driven, and is also a two-wheel-steering vehicle in which the front wheels 3F are steered. Alternatively, the working machine 1 may be a four-wheel-drive vehicle in which the front wheels 3F and the rear wheels 3R are all driven and/or a four-wheel-steering vehicle in which the front wheels 3F and the rear wheels 3R are all steered. Among the traveling devices 3 of the working machine 1, the front wheels 3F and/or the rear wheels 3R may be crawlers.

The operator's seat 4 is provided at an upper rear portion of the vehicle body 2. As illustrated in FIGS. 2 and 4, a mount 11 is provided at the upper rear portion of the vehicle body 2, and the operator's seat 4 is provided on the mount 11. The operator's seat 4 is provided between left and right side windows W2 in the cabin 8.

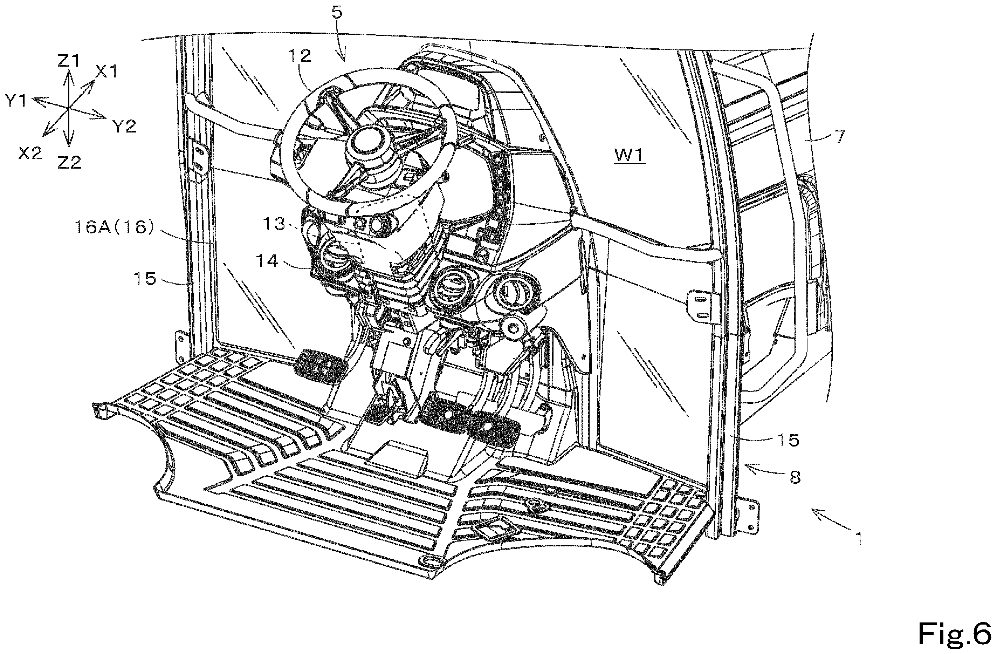

As illustrated in FIG. 2, the steering assembly 5 is provided at the upper rear portion of the vehicle body 2. The steering assembly 5 is located forward of the operator's seat 4. The steering assembly 5 is adjacent to a front window W1 in the cabin 8. As illustrated in FIG. 6, the steering assembly 5 includes a steering wheel 12 and a steering mechanism 13 that steers the traveling devices 3 (front wheels 3F in the present embodiment) in response to a rotation of the steering wheel 12. The steering mechanism 13 is covered with an operation portion panel 14.

As illustrated in FIGS. 2 and 3, the prime mover 6 is provided at an upper front portion of the vehicle body 2. The prime mover 6 is placed under the hood 7. The prime mover 6 of the present embodiment is a diesel engine. Alternatively, the prime mover 6 may be a gasoline engine, or a hydrogen engine driven by energy generated by the combustion of hydrogen gas. Alternatively, the prime mover 6 may be an electric motor driven by electric power generated by a fuel cell or electric power supplied from an external power supply and charged in a battery, or a hybrid prime mover including both an engine and an electric motor.

The cabin 8 is a protector that protects the operator's seat 4. More specifically, as illustrated in FIGS. 2 and 4, the cabin 8 is a box-shaped structure that covers the front, rear, left, right, and top of the operator's seat 4, and includes pillars 15, panels 16, and a roof 17. The pillars 15 are column-shaped frames that stand at locations forward and rearward of the operator's seat 4 with intervals provided in the left-right direction. In other words, the pillars 15 define protection frames at the front-left, front-right, rear-left, and rear-right corners of the cabin 8. The roof 17 is supported by the upper end portions of the four pillars 15.

The panels 16 include a front panel 16A, left and right side panels 16B, and a rear panel 16C. The front panel 16A is provided forward of the operator's seat 4 and between two of the pillars 15 arranged next to each other in the left-right direction. The front panel 16A defines the front window W1 of the cabin 8. The side panels 16B are provided on the left and right sides of the operator's seat 4, each between two of the pillars 15 arranged next to each other in the front-rear direction. The side panels 16B define the left and right side windows W2 of the cabin 8. The rear panel 16C is provided rearward of the operator's seat 4 and between two of the pillars 15 arranged next to each other in the left-right direction. The rear panel 16C defines a rear window W3 of the cabin 8. The windows W1, W2, and W3 are made of an optically transparent material that is highly transparent to radio waves, such as glass.

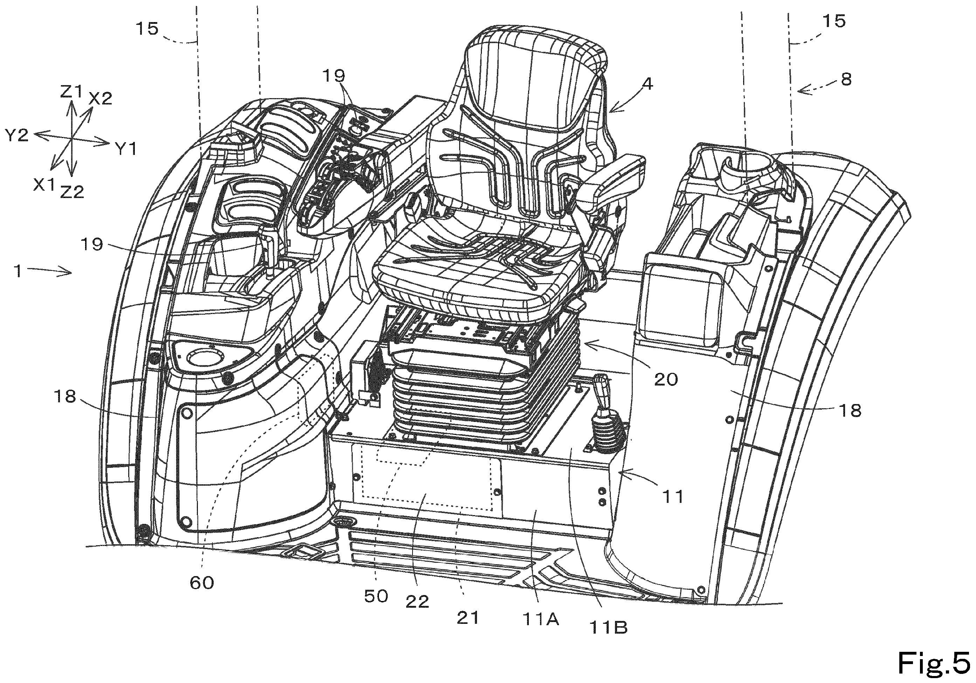

As illustrated in FIG. 5, consoles 18 are provided in the cabin 8. The consoles 18 are provided at left and right locations on an upper portion of the mount 11 with the operator's seat 4 provided between the consoles 18. In other words, the consoles 18 are located on the left and right sides of the operator's seat 4. A plurality of operation devices 19 including operation buttons and operation levers are provided at upper portions of the consoles 18. Thus, the steering assembly 5, the mount 11, and the consoles 18 are provided around the operator's seat 4 in the cabin 8.

The mount 11 includes a seat adjuster 20, an opening 21, and a cover body 22. The seat adjuster 20 allows the operator's seat 4 to be coupled to and supported by the mount 11 in a movable manner. More specifically, the seat adjuster 20 of the present embodiment includes a slider that allows the operator's seat 4 to move relative to the upper portion of the mount 11 in the front-rear direction within a predetermined range. In other words, the operator's seat 4 is coupled to and supported by the upper portion of the mount 11 such that the operator's seat 4 is capable of moving in the front-rear direction (sliding) within the predetermined range.

The seat adjuster 20 may include, in addition to or instead of the slider, a lifter that allows the operator's seat 4 to move relative to the upper portion of the mount 11 in the up-down direction within a predetermined range and/or a swivel device that allows the operator's seat 4 to turn relative to the upper portion of the mount 11 in the left-right direction within a predetermined angle range. In other words, the operator's seat 4 may be coupled to and supported by the upper portion of the mount 11 such that the operator's seat 4 is capable of moving in the up-down direction (lifting) within a predetermined range and/or turning in the left-right direction (swiveling) within a predetermined angle range in addition to sliding as described above.

The opening 21 is provided in a front plate portion (mount front plate) 11A of the mount 11. The opening 21 is large enough to allow the correction information communicator assembly 50 to be inserted into the internal space of the mount 11 from the front.

The cover body 22 covers the opening 21 in the mount front plate 11A from the front. The cover body 22 is a plate body large enough to cover the entirety of the opening 21, and is fixed with screws to a portion of the mount front plate 11A around the peripheral edge of the opening 21. The cover body 22 is made of a synthetic resin material that is highly transparent to radio waves. The cover body 22 may be at least partially or entirely made of a metal plate.

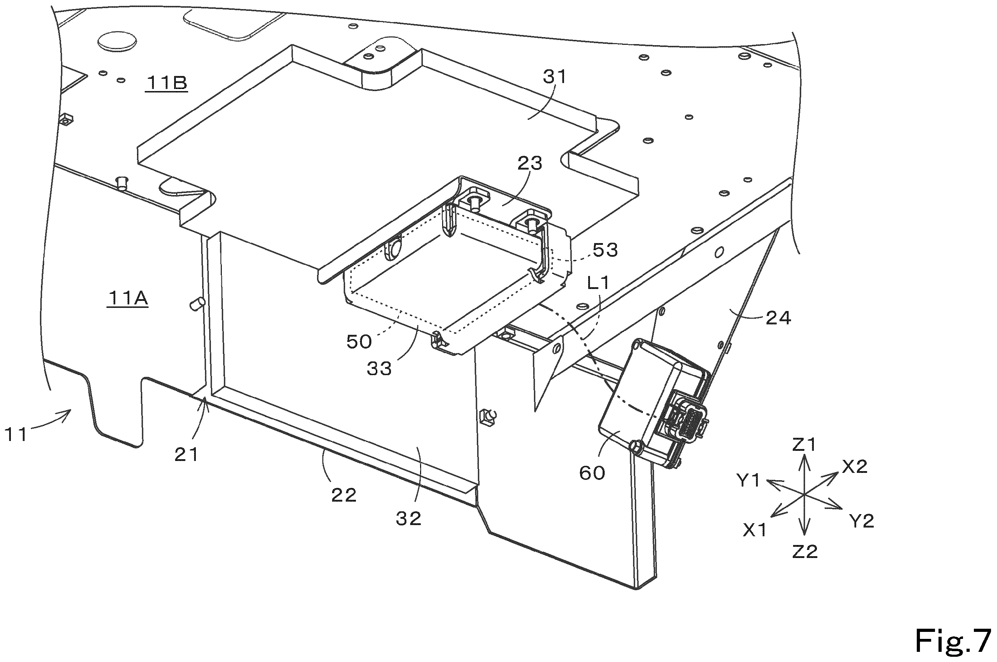

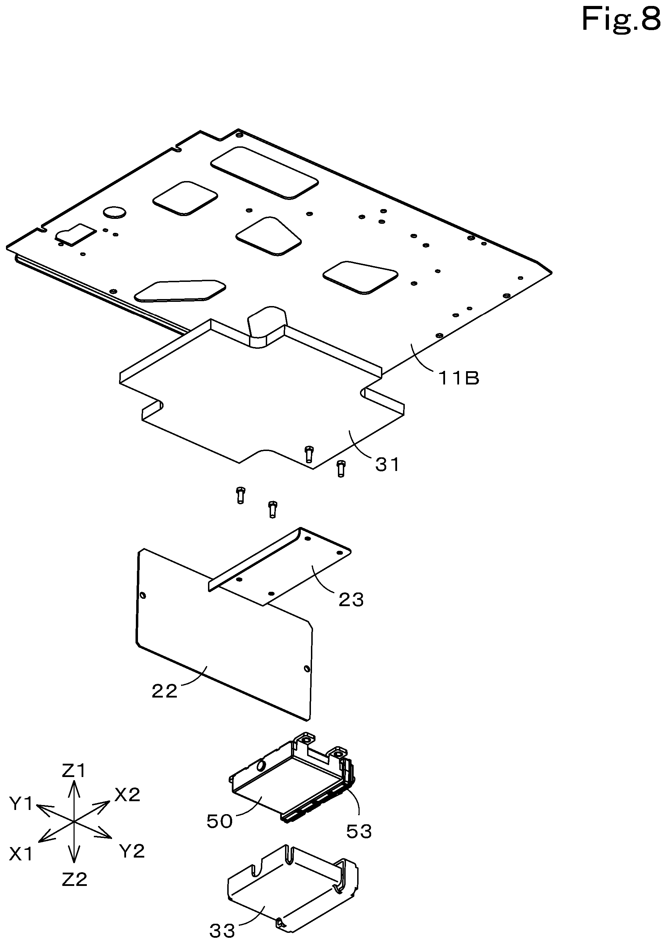

As illustrated in FIGS. 7 and 8, the cover body 22 is provided with a support plate 23. The support plate 23 is a flat plate body extending rearward from a rear surface of the cover body 22 to be substantially parallel to an upper plate portion (mount upper plate) 11B of the mount 11. The support plate 23 is located below the mount upper plate 11B with a predetermined gap therebetween. The correction information communicator assembly 50 is fixed to the support plate 23. The correction information communicator assembly 50 may be fixed to the cover body 22.

As illustrated in FIG. 2, the correction information communicator assembly 50 is located inside the mount 11. In other words, the correction information communicator assembly 50 is located lower than the operator's seat 4. When the vehicle body 2 includes the ROPS as a protector for the operator's seat 4, there is a possibility that the region around the operator's seat 4 will be exposed to direct sunlight, wind, or rain for a long time. However, when the correction information communicator assembly 50 is located inside the mount 11 as described above, the possibility that the correction information communicator assembly 50 will be overheated by direct sunlight or exposed to water can be eliminated or reduced. In addition, even when the working machine 1 is a narrow working vehicle as described above, the space located lower than the operator's seat 4 is sufficiently large to accommodate the correction information communicator assembly 50.

As described above, the correction information communicator assembly 50 of the present embodiment is a communication device with a built-in antenna. Therefore, the communicator 51 of the correction information communicator assembly 50 is located inside the mount 11 together with the communicator assembly main body 52. Similarly to the cover body 22 of the mount 11, the casing of the correction information communicator assembly 50 is made of a synthetic resin material that is highly transparent to radio waves.

As illustrated in FIG. 7, the correction information communicator assembly 50 is located adjacent to the cover body 22. More specifically, the correction information communicator assembly 50 is fixed with screws to the support plate 23 on the rear surface of the cover body 22 (in the mount 11). Therefore, when the correction information communicator assembly 50 is to be inspected or replaced, the correction information communicator assembly 50 can be removed from the mount 11 by removing the cover body 22 from the mount front plate 11A.

When the correction information communicator assembly 50 is a communication device with a separate antenna, at least the communicator 51 of the correction information communicator assembly 50 is located adjacent to the cover body 22. In such a case, the communicator assembly main body 52 can be located at an inner bottom portion of the mount 11, an inner side portion of the mount 11, or other locations surrounded by members that impede the wireless communication. Thus, the communicator 51 and the communicator assembly main body 52 can be arranged more flexibly.

The correction information communicator assembly 50 includes a connector 53 to which a communication cable L1 is to be connected. In the present embodiment, the correction information communicator assembly 50 is attached to a lower surface of the support plate 23 such that the connector 53 faces toward the right of the mount 11. Thus, when the correction information communicator assembly 50 is to be inspected or replaced, the communication cable L1 can be easily attached to and removed from the correction information communicator assembly 50.

As illustrated in FIGS. 3 and 5, the controller 60 is located inside the right console 18. The controller 60 is provided on an inner bottom portion of the consoles 18 at a location close to the mount 11. Thus, the controller 60 and the correction information communicator assembly 50 are both located lower than the operator's seat 4.

More specifically, as illustrated in FIG. 7, a support frame 24 is provided vertically on the inner bottom portion of the console 18, and the controller 60 is fixed with screws to a surface of the support frame 24 facing the mount 11. Thus, the controller 60 is located close to the correction information communicator assembly 50. In addition, the controller 60 is located adjacent to the connector 53 of the correction information communicator assembly 50. Thus, the correction information communicator assembly 50 can be connected to the controller 60 with the communication cable L1 that is relatively short.

A sound absorbing material 31 is provided in the gap between the support plate 23 and the mount upper plate 11B, that is, between the correction information communicator assembly 50 and the mount upper plate 11B. A sound absorbing material 32 is also provided on the rear surface (inner surface) of the cover body 22, that is, between the correction information communicator assembly 50 and the cover body 22.

The sound absorbing materials 31 and 32 are made of an elastic material with form stability, and have the effect of reducing noise emitted from the correction information communicator assembly 50 and the effect of reducing the vibrations of the correction information communicator assembly 50 while the vehicle is traveling. The sound absorbing materials 31 and 32 are also thermally insulative and suppress the transmission of heat outside the mount 11 to the correction information communicator assembly 50.

As illustrated in FIGS. 7 and 8, the correction information communicator assembly 50 is covered with a thermally insulating cover 33. The thermally insulating cover 33 is box-shaped to cover the front, rear, left, right, and lower surfaces of the casing of the correction information communicator assembly 50, and is attached to the casing from below. Thus, the correction information communicator assembly 50 is insulated both by the sound absorbing materials 31 and 32 and by the thermally insulating cover 33. Thus, the possibility that the correction information communicator assembly 50 will be overheated by direct sunlight or exposed to water can be more effectively eliminated or reduced.

### Variations

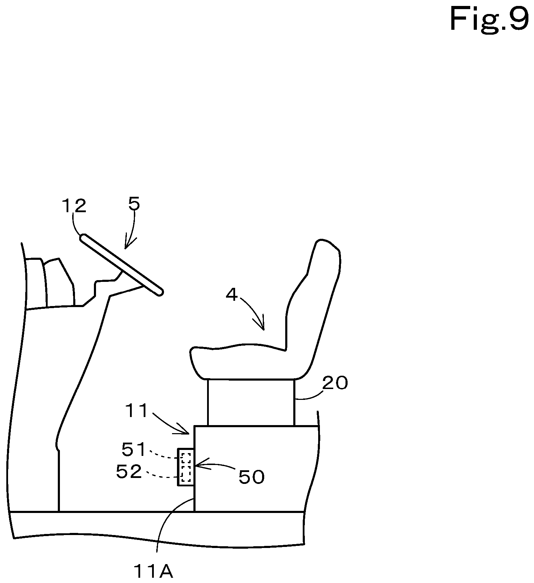

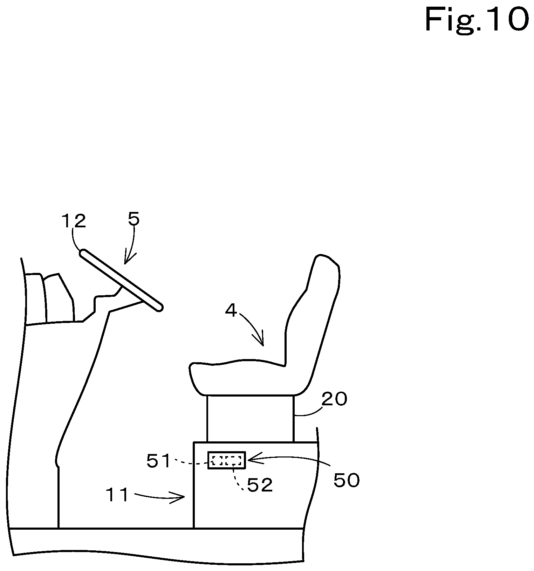

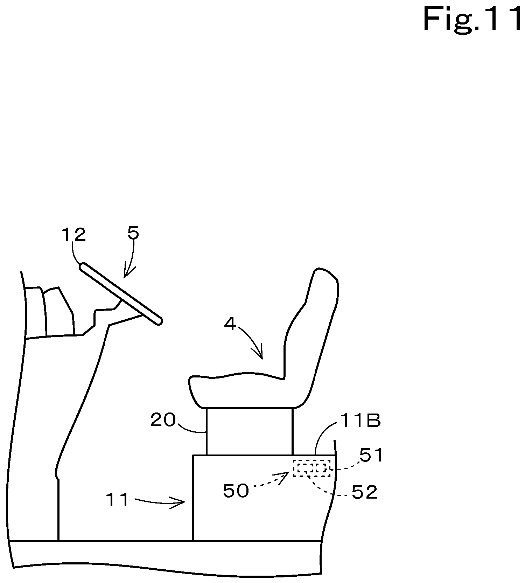

Although the correction information communicator assembly 50 is located inside the mount 11 in the working machine 1 of the above-described embodiment, the correction information communicator assembly 50 may be fixed to an outer wall of the mount 11. More specifically, for example, as illustrated in FIG. 9, the correction information communicator assembly 50 may be fixed to the mount front plate 11A, which defines an outer wall of the mount 11. In addition, when the surrounding space is relatively large and when there are only a few members that impede the wireless communication in the surrounding space, the correction information communicator assembly 50 may be provided at a side portion of the mount 11 (for example, on a left wall of the mount 11), as illustrated in FIG. 10, or at a rear portion of the mount 11 (for example, on an inner rear portion of the mount 11), as illustrated in FIG. 11. In addition, when the working machine 1 includes the ROPS as a protector for the operator's seat 4, the correction information communicator assembly 50 may be covered with a waterproof cover and located in the vicinity of the operator's seat 4. Alternatively, the casing of the correction information communicator assembly 50 may have a waterproof structure, and the correction information communicator assembly 50 may be located in the vicinity of the operator's seat 4.

In the working machine 1 of the above-described embodiment, the correction information communicator assembly 50 is provided adjacent to the cover body 22 made of a material transparent to radio waves. Alternatively, however, an outer wall of the mount 11 may include at least a wall portion (for example, a rear portion of the mount upper plate 11B) made of a material that is highly transparent to radio waves, and the correction information communicator assembly 50 may be provided adjacent to the wall portion (see FIG. 11).

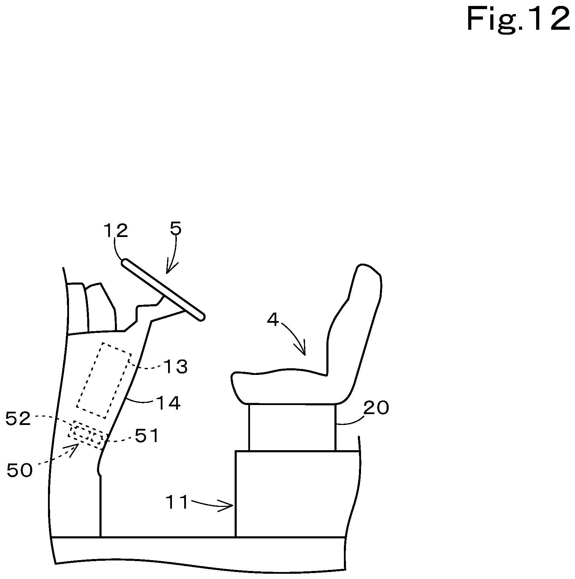

Although the correction information communicator assembly 50 is located lower than the operator's seat 4 in the working machine 1 of the above-described embodiment, the correction information communicator assembly 50 may be located at a lower portion of the steering assembly 5. More specifically, as illustrated in FIG. 12, the operation portion panel 14 located at the lower portion of the steering assembly 5 is made of a synthetic resin material that is highly transparent to radio waves, and the correction information communicator assembly 50 is fixed with screws to an inner surface (front surface) of the operation portion panel 14. In other words, the correction information communicator assembly 50 is located adjacent to the operation portion panel 14 transparent to radio waves. In this variation, when the correction information communicator assembly 50 is a communication device with a separate antenna, at least the communicator 51 of the correction information communicator assembly 50 is located adjacent to the operation portion panel 14. For example, the communicator 51 is fixed with screws to the inner surface of the operation portion panel 14. In this case, the communicator assembly main body 52 can be located inside the steering assembly 5, under the floor of the cabin 8 below the steering assembly 5, or other locations surrounded by members that impede the wireless communication. Thus, the communicator 51 and the communicator assembly main body 52 can be arranged more flexibly.

Example embodiments of the present invention provide working machines 1 described in the following items.

(Item 1) A working machine 1 including a vehicle body 2 to travel, an operator's seat 4, a position detector 40 to acquire position information from one or more positioning satellites G, a correction information communicator assembly 50 to wirelessly connect to an external communication network N, and a controller 60 configured or programmed to compensate for an error in the position information based on position correction information acquired from the external communication network N, wherein the correction information communicator assembly 50 is located in the vicinity of the operator's seat 4.

The space around the operator's seat 4 on which the operator sits is relatively large, and there are only a few members that impede the wireless communication. Therefore, with the working machine 1 of item 1, the correction information communicator assembly 50 can maintain stable communication. This makes it possible to achieve measured position correction with high accuracy and stability.

In addition, with the working machine 1 of item 1, sufficient space is maintained around the correction information communicator assembly 50. Therefore, it is possible to eliminate or reduce the likelihood that the correction information communicator assembly 50 will come into contact with the surrounding structures due to the vibrations of the vehicle body 2 that is traveling, and eliminate or reduce the likelihood that the communication cable L1 connecting the correction information communicator assembly 50 to the controller 60 will receive an excessive load. Therefore, the occurrence of failure of the correction information communicator assembly 50 or the communication cable L1 can be reduced, and the measured position correction can be performed stably for a long time.

(Item 2) The working machine 1 according to item 1, wherein the correction information communicator assembly 50 is located lower than the operator's seat 4.

There is a larger amount of space at the location lower than the operator's seat 4 than at a side or rear of the operator's seat 4. In addition, fewer members that impede the wireless communication are present at the location lower than the operator's seat 4 than at the side or rear of the operator's seat 4. Therefore, with the working machine 1 of item 2, the correction information communicator assembly 50 can maintain more stable communication. Accordingly, the measured position correction can be performed more stably.

Furthermore, with the working machine 1 of item 2, the correction information communicator assembly 50 is located relatively close to the swing center of the vehicle body 2. Therefore, the occurrence of failure of the correction information communicator assembly 50 due to the vibrations of the vehicle body 2 can be more reliably eliminated or reduced. Accordingly, the measured position correction can be performed stably for a long time.

(Item 3) The working machine 1 according to item 1 or 2, wherein the vehicle body 2 includes a mount 11 to support the operator's seat 4, and the correction information communicator assembly 50 is located inside the mount 11.

With the working machine 1 of item 3, it is possible to eliminate or reduce the likelihood that the correction information communicator assembly 50 will come into contact with the foot of the operator in the vehicle body 2 or other external objects. It is also possible to eliminate or reduce the likelihood that correction information communicator assembly 50 will be overheated by direct sunlight or exposed to water. Therefore, the occurrence of failure of the correction information communicator assembly 50 can be further reduced, and the measured position correction can be performed stably for a long time.

(Item 4) The working machine 1 according to item 3, wherein the mount 11 includes a cover body 22 transparent to radio waves, and the correction information communicator assembly 50 is adjacent to the cover body 22.

With the working machine 1 of item 4, radio waves are smoothly transmitted into and out of the mount 11 through the cover body 22. Therefore, the correction information communicator assembly 50 can maintain more stable communication. Accordingly, the measured position correction can be performed more stably.

Furthermore, with the working machine 1 of item 4, since the cover body 22 is provided, it is possible to more reliably eliminate or reduce the likelihood that the correction information communicator assembly 50 will come into contact with an external object, be overheated by direct sunlight, or be exposed to water. Therefore, the occurrence of failure of the correction information communicator assembly 50 can be further reduced, and the measured position correction can be performed more stably for a long time.

(Item 5) The working machine 1 according to item 4, wherein the cover body 22 is located at a front portion of the mount 11.

The space forward of the mount 11, where the operator's feet are placed, is large even if the working machine 1 is a narrow-width model in which the dimension of the vehicle body 2 in the left-right direction is relatively small, and there are only a few members that impede the wireless communication. In addition, the front portion of the mount 11 is close to the operator sitting in the operator's seat 4. Therefore, the correction information communicator assembly 50 can maintain stable communication both when the correction information communicator assembly 50 is wirelessly connected to the external communication network N directly and when the correction information communicator assembly 50 is connected to the external communication network N via the wireless communication terminal P, such as a mobile information terminal carried by the operator or an information terminal (operation terminal) mounted in the vehicle body 2. Accordingly, the measured position correction can be performed more stably.

(Item 6) The working machine 1 according to item 4 or 5, wherein the correction information communicator assembly 50 includes a communicator 51, and a communicator assembly main body 52 to transfer, to the controller 60, the position correction information received by the communicator 51, and the correction information communicator assembly 50 is positioned such that at least the communicator 51 is adjacent to the cover body 22.

With the working machine 1 of item 6, radio waves are more reliably transmitted to the region around the communicator 51. Therefore, the correction information communicator assembly 50 can maintain more stable communication. Accordingly, the measured position correction can be performed more stably.

(Item 7) The working machine 1 according to any one of items 1 to 6, further including a steering assembly 5, wherein the steering assembly 5 is located forward of the operator's seat 4, and the correction information communicator assembly 50 is located at a lower portion of the steering assembly 5.

There is a larger amount of space at the lower portion of the steering assembly 5 than at a side or a rear of the operator's seat 4. Furthermore, fewer members that impede the wireless communication are present at the lower portion of the steering assembly 5 than at the side or the rear of the operator's seat 4. Therefore, with the working machine 1 of item 7, the correction information communicator assembly 50 can maintain more stable communication. Accordingly, the measured position correction can be performed more stably.

(Item 8) The working machine 1 according to item 7, wherein the steering assembly 5 includes an operation portion panel 14 to cover the lower portion of the steering assembly 5, and the operation portion panel 14 is at least partially made of a plate transparent to radio waves.

With the working machine 1 of item 8, it is possible to eliminate or reduce the likelihood that the correction information communicator assembly 50 will come into contact with the foot of the operator in the vehicle body 2 or other external objects. It is also possible to eliminate or reduce the likelihood that correction information communicator assembly 50 will be overheated by direct sunlight or exposed to water. Therefore, the occurrence of failure of the correction information communicator assembly 50 can be further reduced, and the measured position correction can be performed more stably for a long time.

In addition, the lower portion of the steering assembly 5 is close to the operator sitting in the operator's seat 4. Therefore, the correction information communicator assembly 50 can maintain stable communication both when the correction information communicator assembly 50 is wirelessly connected to the external communication network N directly and when the correction information communicator assembly 50 is connected to the external communication network N via the wireless communication terminal P, such as a mobile information terminal carried by the operator or an information terminal (operation terminal) mounted in the vehicle body 2. Accordingly, the measured position correction can be performed more stably.

(Item 9) The working machine 1 according to item 8, wherein the correction information communicator assembly 50 includes a communicator 51, and a communicator assembly main body 52 to transfer, to the controller 60, the position correction information received by the communicator 51, and the correction information communicator assembly 50 is positioned such that at least the communicator 51 is adjacent to the operation portion panel 14.

With the working machine 1 of item 9, radio waves are more reliably transmitted to the region around the communicator 51. Therefore, the correction information communicator assembly 50 can maintain more stable communication. Accordingly, the measured position correction can be performed more stably.

(Item 10) The working machine 1 according to any one of items 1 to 9, wherein the correction information communicator assembly 50 includes a wireless communicator assembly wirelessly connectable to a wireless communication terminal P and wirelessly connectable to the external communication network N via the wireless communication terminal P.

With the working machine 1 of item 10, the correction information communicator assembly 50 is wirelessly connectable to the external communication network N via the wireless communication terminal P, such as a mobile information terminal carried by the operator or an information terminal (operation terminal) mounted in the vehicle body 2, and therefore can maintain stable communication. Accordingly, the measured position correction can be performed more stably.

(Item 11) The working machine 1 according to any one of items 1 to 9, wherein the correction information communicator assembly 50 includes a wireless communicator assembly wirelessly connectable to the external communication network N directly.

According to the working machine 1 of item 11, the correction information communicator assembly 50 is wirelessly connectable to the external communication network N directly. Therefore, the measured position correction can be performed more stably with a simpler structure compared to when the correction information communicator assembly 50 is wirelessly connected to the external communication network N via the wireless communication terminal P such as a mobile information terminal carried by the operator.

While example embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. A working machine (1) comprising:
- a vehicle body (2) to travel;
- an operator's seat (4);
- a position detector (40) to acquire position information from one or more positioning satellites (G);
- a correction information communicator assembly (50) to wirelessly connect to an external communication network (N); and
- a controller (60) configured or programmed to compensate for an error in the position information based on position correction information acquired from the external communication network (N),
wherein the correction information communicator assembly (50) is located in the vicinity of the operator's seat (4).

2. The working machine (1) according to claim 1, wherein the correction information communicator assembly (50) is located lower than the operator's seat (4).

3. The working machine (1) according to claim 1 or 2, wherein
- the vehicle body (2) includes a mount (11) to support the operator's seat (4); and
- the correction information communicator assembly (50) is located inside the mount (11).

4. The working machine (1) according to claim 3, wherein
- the mount (11) includes a cover body (22) transparent to radio waves; and
- the correction information communicator assembly (50) is adjacent to the cover body (22).

5. The working machine (1) according to claim 4, wherein the cover body (22) is located at a front portion of the mount (11).

6. The working machine (1) according to claim 4 or 5, wherein
- the correction information communicator assembly (50) includes:
- a communicator (51); and
- a communicator assembly main body (52) to transfer, to the controller (60), the position correction information received by the communicator (51); and
- the correction information communicator assembly (50) is positioned such that at least the communicator (51) is adjacent to the cover body (22).

7. The working machine (1) according to any one of claims 1 to 6, further comprising a steering assembly (5); wherein
- the steering assembly (5) is located forward of the operator's seat (4); and
- the correction information communicator assembly (50) is located at a lower portion of the steering assembly (5).

8. The working machine (1) according to claim 7, wherein
- the steering assembly (5) includes an operation portion panel (14) to cover the lower portion of the steering assembly (5); and
- the operation portion panel (14) is at least partially made of a plate transparent to radio waves.

9. The working machine (1) according to claim 8, wherein
- the correction information communicator assembly (50) includes:
- a communicator (51); and
- a communicator assembly main body (52) to transfer, to the controller (60), the position correction information received by the communicator (51); and
- the correction information communicator assembly (50) is positioned such that at least the communicator (51) is adjacent to the operation portion panel (14).

10. The working machine (1) according to any one of claims 1 to 9, wherein the correction information communicator assembly (50) includes a wireless communicator assembly wirelessly connectable to a wireless communication terminal (P) and wirelessly connectable to the external communication network (N) via the wireless communication terminal (P).

11. The working machine (1) according to any one of claims 1 to 9, wherein the correction information communicator assembly (50) includes a wireless communicator assembly wirelessly connectable to the external communication network (N) directly.
